# EUROPÄISCHE PATENTANMELDUNG

(11) **EP 2 192 462 A2**
(43) Veröffentlichungstag der Anmeldung: **02.06.2010**
(21) Anmeldenummer: 09014820.6
(22) Anmeldetag: 30.11.2009
(51) Int. Cl.: G05B 19/05

(54) **Verfahren zum Programmieren einer sicherheitsgerichteten speicherprogrammierbaren Steuerung und Vermittler-Funktionsbaustein**

(30) Priorität: 01.12.2008 DE 102008059841
(71) Anmelder: Robert Bosch GmbH, 70469 Stuttgart (DE)
(72) Erfinder: Schultze, Stephan, 97816 Lohr (DE); Mühlbauer, Michael, 97737 Gemünden (DE); Seubert, Michael, 97282 Retzstadt (DE); Ost, Jochen, 97816 Lohr (DE)

(57) **Zusammenfassung**

Die Erfindung betrifft ein Verfahren zum Programmieren einer sicherheitsgerichteten Speicherprogrammierbaren Steuerung (10), die mit einer Einrichtung (3) verbindbar ist, welche eine einrichtungsintegrierte, mittels vorbestimmter erster Daten (100) ansteuerbare Sicherheitsfunktion bereitstellt, wobei die Speicherprogrammierbare Steuerung (10) mit wenigstens einem ersten Programmteil (1, 1') zur Bereitstellung zweiter Daten (200) zum Ansteuern der einrichtungsintegrierten Sicherheitsfunktion und mit einem zweiten Programmteil (2) zur automatischen Umwandlung der zweiten Daten (200) in die ersten Daten (100) ausgestattet wird sowie einen entsprechenden Vermittler-Funktionsbaustein (2) für eine SPS (10).

## Beschreibung

Die vorliegende Erfindung betrifft ein Verfahren zum Programmieren einer sicherheitsgerichteten Speicherprogrammierbaren Steuerung, einen Vermittler-Funktionsbaustein, eine Recheneinheit, ein Computerprogramm sowie ein Computerprogrammprodukt.

### Stand der Technik

Die Programmierung von sicherheitsgerichteten Speicherprogrammierbaren Steuerungen (SI-SPS) wird üblicherweise mittels Programmiersprachen nach IEC 61131-3 durchgeführt (z.B. ST: Strukturierter Text; FUP: Funktionsplan; KOP: Kontaktplan; ...). Entsprechend den Safety-Software-Anforderungen der ISO 13849-1 bzw. EN 62061 wird die Verwendung grafischer Programmiersprachen wie KOP und FUP empfohlen. Die vorliegende Erfindung ist aber nicht auf diese Sprachen beschränkt, sondern zielt allgemein auf die sichere SPS-Programmierung ab. Die Programmierung erfolgt in Funktionsbausteinen (Programmbausteinen), welche jeweils eine oder mehrere technologisch oder funktionell zusammengehörende Programmanweisungen enthalten. Ein vollständiges SPS-Programm setzt sich in der Regel aus mehreren Funktionsbausteinen zusammen, wobei die einzelnen Bausteine in unterschiedlichen SPS-anwendungsbezogenen Sprachen eingegeben sein können. Funktionsbausteine (FB) enthalten das eigentliche Anwenderprogramm und können bei jedem Aufruf (sog. Instanzen) mit unterschiedlichen Daten versorgt werden. Ein sicherer Funktionsbaustein wird häufig mit "SI-FB", ein sicherer Funktionsbaustein zur Ansteuerung einer sicheren Betriebsart, z.B. Bewegung, in einem Antrieb häufig mit "Safe Motion FB" bezeichnet. Funktionsbausteine zur Programmierung einer SI-SPS sind in sich abgeschlossene Programm-Elemente, die je nach Rechtslage bspw. von TÜV oder Berufsgenossenschaft abgenommen bzw. zertifiziert werden müssen.

Der Umfang sicherheitsgerichteter Funktionen in Antrieben nimmt kontinuierlich zu und bietet weit mehr als nur das sichere Abschalten der Maschine. Die Anwendungen werden zunehmend komplexer, insbesondere bei ineinandergreifenden Schutzbereichen bzw. mehreren Zugängen zum Gefahrenbereich. Die Sicherheitsfunktionen sind zwischen Einrichter, Bediener, Service- und Reinigungspersonal zu differenzieren. Der modulare Aufbau von Maschinen bzw. die Konfigurationswünsche der Kunden verlangen nach einer flexiblen Sicherheitslösung vergleichbar der klassischen Automatisierungslösung.

Somit lösen programmierbare Sicherheitssysteme zunehmend die klassischen, diskret verdrahteten und in Relais-Logik realisierten Konzepte ab, da sie die geforderte Flexibilität bieten. Der Schnittstelle zwischen SPS und Antrieb kommt damit eine besondere Bedeutung zu. Steuer- und Statusinformationen sind zwischen den sicherheitsgerichteten Komponenten auszutauschen. Zudem ist der Status der Sicherheitstechnik mit dem der Prozess-Steuerung zu synchronisieren.

Die Schnittstelle zwischen der sicheren Logik (SI-SPS-Programm) und der antriebsintegrierten Sicherheitsfunktion (üblicherweise eine sichere Überwachung im Antrieb) beinhaltet einerseits Ein- und Ausgänge zum SI-SPS-Programm und andererseits "interne" Signale zur Systemebene, die vom Programmierer an die SI-Funktion im Antrieb geroutet werden müssen. Sind mehrere Funktionsblöcke in dem SPS-Programm enthalten, die eine antriebsintegrierte Sicherheitsfunktion ansteuern, müssen diese vom Programmierer zueinander verriegelt werden und an die entsprechenden Signale (via Hardware oder Feldbus) im Antrieb übertragen werden, da sie üblicherweise unterschiedliche Prioritäten besitzen. Diese Prioritäten müssen auch in der Ansteuerung abgebildet werden, um möglichst keine Fehlermeldungen aufgrund der Verletzung von Prioritäten zu erhalten.

Als Kommunikationsmedium zwischen der sicheren Logik und der antriebsintegrierten Sicherheitsfunktion (üblicherweise eine sichere Überwachung im Antrieb) gibt es beispielsweise die Möglichkeit einer sicheren Feldbusübertragung (z.B. PROFIsafe, SERCOS safety, usw.) oder eine hardwaremäßige Ankopplung. Auch hier muss vom Programmierer auf der Seite der sicheren Logik die entsprechende Schnittstelle bedient werden, d.h. je nach verwendetem Medium müssen die entsprechenden SI-Signale an die schnittstellenabhängigen Signale verschaltet werden. Diese können je nach Kommunikationsmedium zudem unterschiedlich sein. Dies ist aufwändig und erfordert detailliertes Wissen über die verschiedenen Schnittstellen der unterschiedlichen Kommunikationsmedien.

Schließlich müssen die SI-FBs vom SI-Programmierer einzeln instanziiert werden. Zu beachten ist hierbei, dass jeder FB nur maximal einmalig instanziiert wird, da sonst verschiedene Instanzen eines SI-FBs widersprüchliche Sicherheitsfunktionen anfordern könnten.

Insgesamt sind die antriebsintegrierten Sicherheitsfunktionen daher bei der Programmierung einer SI-SPS nur sehr aufwändig zu implementieren.

Ausgehend von diesem Stand der Technik schlägt die vorliegende Erfindung ein Verfahren zum Programmieren einer sicherheitsgerichteten Speicherprogrammierbaren Steuerung, einen Vermittler-Funktionsbaustein, eine Recheneinheit, ein Computerprogramm sowie ein Computerprogrammprodukt mit den Merkmalen der unabhängigen Patentansprüche vor. Vorteilhafte Weiterbildungen sind Gegenstand der Unteransprüche sowie der nachfolgenden Beschreibung.

Die erfindungsgemäße Lehre betrifft die Programmierung einer sicherheitsgerichteten Speicherprogrammierbaren Steuerung, die mit einer Einrichtung verbindbar ist. Die Einrichtung stellt eine einrichtungsintegrierte, mittels vorbestimmter, insbesondere herstellerspezifischer, erster Daten ansteuerbare Sicherheitsfunktion bereit. Die Speicherprogrammierbare Steuerung wird nun mit wenigstens einem ersten Programmteil zur Bereitstellung zweiter Daten zum Ansteuern der einrichtungsintegrierten Sicherheitsfunktion und mit einem zweiten Programmteil zur automatischen Umwandlung der zweiten Daten in die ersten Daten ausgestattet.

Vorzugsweise handelt es sich bei dem ersten und/oder zweiten Programmteil um einen Funktionsbaustein (FB) einer SPS-Programmierumgebung, gemäß einem Aspekt der Erfindung handelt es sich bei dem zweiten Programmteil um einen Vermittler-Funktionsbaustein. Obwohl nachfolgend hauptsächlich Funktionsbausteine beschrieben werden, sei angemerkt, dass die erfindungsgemäße Lehre alle Arten von ersten und zweiten Programmteilen umfasst und nicht auf Funktionsbausteine beschränkt ist.

Vorzugsweise handelt es sich bei der einrichtungsintegrierten Sicherheitsfunktion um eine antriebsintegrierte Sicherheitsfunktion. Die Sicherheitsfunktionen des Antriebs sind häufig als Überwachungsfunktionen realisiert. Sprechen die antriebsinternen Überwachungen an, dann leiten sie eine antriebsbasierte Failsafe-Reaktion ein. Dieser Fall sollte im Betrieb jedoch nicht eintreten, da er bei synchronisierten Achsen in der Regel die Verfügbarkeit der Anlage einschränkt. Demzufolge sollte eine entsprechende Steuerung (Motion-Steuerung) zu jeder Zeit passende Führungsgrößen vorgeben, damit die Überwachungsfunktionen nicht ansprechen.

### Vorteile der Erfindung

Mit der vorliegenden Erfindung kann eine Vielzahl von im Stand der Technik vorhandenen Nachteilen überwunden werden. Der Anwender muss mehr nicht mehr selbständig erste Programmteile, d.h. insbesondere SI-FBs, mit den vorhandenen einrichtungsintegrierten Sicherheitsfunktionen verbinden. Hierdurch kann eine Fehlerquelle bei der SPS-Programmierung beseitigt werden. Besonders im Bereich der SI-Programmierung kann somit eine möglichst einfache Programmierung erhalten werden; die durch Benutzerfreundlichkeit und Übersichtlichkeit hilft, Fehler zu vermeiden.

Die Erfindung umfasst die technische Lehre, ein Proxy-Konzept bei der SI-Programmierung mit dem Ziel, Fehler zu vermeiden, bereitzustellen und dadurch die SI-Technik mit höherer Sicherheit auszustatten (Programmierfehlermöglichkeiten erhöhen die Wahrscheinlichkeit eines gefährlichen Zustandes und verringern dadurch die Sicherheit). Insgesamt kann die Einbindung der antriebsintegrierten Sicherheitsfunktion in die sichere Ablaufsteuerung deutlich vereinfacht werden, weshalb systematische Fehler auf ein Minimum beschränkt werden.

Weitere erfindungsgemäß erzielbare Vorteile werden nachfolgend unter Bezugnahme auf bevorzugte Ausführungsformen erläutert.

Vorzugsweise werden die zweiten Daten der ersten Programmteile automatisch zueinander verriegelt. Es ist nicht mehr erforderlich, Verriegelungen der verschiedenen ersten Programmteile, z.B. Safe Motion FBs, bzw. von jenen bereitgestellter Daten zueinander zu programmieren, um die unterschiedlichen Prioritäten der verschiedenen sicherheitsbezogenen Überwachungen im Antrieb zu berücksichtigen. Die Verriegelungen werden nunmehr automatisch von dem zweiten Programmteil bzw. Vermittler-Funktionsbaustein (Proxy) bereitgestellt. Vorzugsweise führt der Proxy Verriegelungen der einzelnen SI-FBs zueinander durch. Im Proxy findet somit eine Verriegelung der verschiedenen Sicherheitsfunktionen statt, so dass Priorisierungen entsprechend der Statemachine des Antriebs berücksichtigt werden und auch Quittierungssignale entsprechend gesetzt werden. Diese zusätzliche Logik ist im Proxy enthalten, so dass der Anwender dies nicht zu implementieren braucht und damit weitere mögliche Anwenderfehler vermieden werden.

In Ausgestaltung wird der zweite Programmteil automatisch instanziiert, wenn die Einrichtung in das Programm der Speicherprogrammierbaren Steuerung eingebunden wird. Vorzugsweise werden somit bspw. beim Anlegen eines Antriebs eine Instanz des Proxy-FBs automatisch für diesen Antrieb im SI-Programm angelegt. Durch ein automatisches Instanziieren des Proxy-FBs braucht der Anwender die Schnittstelle zum sicheren Kommunikationsmedium bzw. zum Antrieb nicht selbst zu konfigurieren. Dadurch werden Anwenderfehler bei der Konfiguration verringert. Das Safety- bzw. SI-Anwenderprogramm ist somit unabhängig von der Feldbus-Anbindung bzw. allgemein von dem verwendetem Kommunikationsmedium (z.B. Ankopplung an SERCOS safety /PROFIsafe). Der Proxy-FB befindet sich somit in der Schnittstelle (Systemebene) zw. Anwenderprogramm und dem sicheren Kommunikationsmedium. Der Proxy-FB besitzt bspw. als Schnittstelle zur antriebsintegrierten Sicherheitstechnik ein herstellerspezifisches Status- und Steuerwort. Die Signale können zum Beispiel binär (SAFEBOOLs) oder auch als (SAFE-)WORD verschaltet werden.

Zweckmäßigerweise wird der wenigstens eine erste Programmteil beim Instanziieren des zweiten Programmteils ebenfalls automatisch instanziiert. In Ausgestaltung stellt somit der Proxy die SI-FBs, die der Anwender nutzen möchte, als FB-Instanzen zur Verfügung, z.B. SafeStop1. Mit anderen Worten werden die SI-FBs (Safe Motion FBs) beim Instanziieren des Proxy-FBs automatisch instanziiert. Hierdurch ergibt sich auch eine Überwachbarkeit bzw. Möglichkeit der Sicherstellung, dass pro Safe Motion FB (jedes Antriebs) nur maximal eine Instanz vorhanden ist. Der Programmierer muss nicht mehr auf die richtige Instanziierung der Safe Motion FBs achten, da dies automatisch durchgeführt wird. Der Proxy-FB stellt die Schnittstelle zw. Anwenderprogramm und antriebsintegrierter Sicherheitstechnik dar.

Es ist von Vorteil, wenn der zweite Programmteil die ersten Daten automatisch über eine vorhandene Datenverbindung zwischen der Speicherprogrammierbaren Steuerung und der Einrichtung überträgt. Damit kann die Notwendigkeit entfallen, je nach Kommunikationsmedium unterschiedliche Ankopplungen der Safe Motion FBs an die antriebsinterne SI-Funktion aufwändig zu programmieren. Die Erfindung führt zu einer Unabhängigkeit der Programmierung von dem zugrunde liegenden Kommunikationsmedium. Der Proxy stellt eine "generische" Schnittstelle der SI-Funktionen des Antriebs zur sicheren Logik dar. Auch eine fehlerhafte Zuordnung zum Antrieb, d.h. die Adressierung eines falschen Antriebs, kann vermieden werden. In Ausgestaltung wird eine automatische Verschaltung der Safety-Signale zum Antrieb im Falle eines SI-Busses (z.B PROFIsafe oder SERCOS safety) bereitgestellt. Im Fall der Übertragung über einen sicheren Feldbus kann das Programmiersystem die Schnittstelle der SI-Signale automatisiert verschalten, da es entweder eine ggfs. durch den SI-Feldbus fest vorgegebene Belegung berücksichtigt oder ein durch den SI-Feldbus mögliches variables Mapping der SI-Signale auf dem Bus vorgeben kann. Hierdurch wird eine automatisierte Verschaltung der SI-Signale vom Proxy bis zum Antrieb möglich.

Gemäß einer bevorzugten Ausgestaltung wird der wenigstens eine erste Programmteil mittels Dialogen parametriert. Die DE 10 2007 062 453.2 ("Verfahren zum Programmieren und/oder Diagnostizieren einer speicherprogrammierbaren Steuerung") beschreibt, wie mittels Dialogen Ein-/Ausgänge von FBs in für den Programmierer besonders vorteilhaften Weise dargestellt werden können bzw. wie Eingangswerte verändert werden können. Bei SI-Funktionen müssen diese Dialoge zusätzlich auch noch den Anforderungen an die sichere Eingabe von Daten genügen (analog zur sicheren Programmierbarkeit bei der SPS-Programmierung des SI-Programms). Vorzugsweise beinhaltet die Ausgestaltung, dass einerseits bei der SI-Programmierung eine dialoggestützte Eingabe bzw. Diagnoseausgabe verfügbar ist und dass andererseits diese Ein-/Ausgabe den SI-Anforderungen an das Programmiersystem genügt. Zweckmäßigerweise wird eine Wizard-Funktionalität zum Bereitstellen des wenigstens einen ersten Programmteils bereitgestellt. Mittels der Wizard-Funktionalität zum Anlegen einer SI-Funktion kann erreicht werden, dass nur diejenigen SI-FBs instanziiert werden, die auch im SI-Programm benötigt werden. Weiterhin können einige Eingänge der Safe Motion FBs mit im Wizard einzugebenden Werten vorbelegt werden bzw. mittels des Wizards sogar Verschaltungen von Ein-/Ausgängen eingebbar sein. Indem nur die benötigten SI-FBs instanziiert werden, vereinfacht sich das SI-Programm (Komplexität) bzw. verringert sich der Speicherbedarf der instanziierten Variablen. Es ist möglich, im Wizard auch die oben genannten Dialog anzuzeigen, um die Eingabe von FB-Eingangswerten zu unterstützen.

Vorzugsweise wird eine Wizard-Funktionalität zum Instanziieren des wenigstens einen ersten Programmteils und/oder des zweiten Programmteils bereitgestellt. Mit anderen Worten wird eine Wizard-Funktionalität zum Instanziieren der SI-FBs und/oder des Proxy-FBs beim Anlegen einer Achse bereitgestellt. Wird im Kontext der nicht sicheren Programmierung eine Achse angelegt, kann dies mittels einer Wizard-Funktionalität unterstützt werden. Im Wizard werden dann Daten der Achse wie z.B. Hardware-Typ, Firmware-Version, Geräte-Adressen, usw. eingegeben. Dies kann zusätzlich damit verknüpft werden, dass auch die entsprechende Achse im Kontext der SI-Programmierung mit Proxy-FB und SI-FBs mit instanziiert wird.

Ein Vermittler-Funktionsbaustein für eine sicherheitsgerichtete Speicherprogrammierbare Steuerung welcher dazu eingerichtet ist, zum Ansteuern einer einrichtungsintegrierten, mittels vorbestimmter erster Daten ansteuerbaren Sicherheitsfunktion von wenigstens einem ersten Programmteil der Speicherprogrammierbaren Steuerung bereitgestellte zweite Daten automatisch in die ersten Daten umzuwandeln ist ebenfalls Gegenstand der Erfindung.

In Ausgestaltung ist ein entsprechender Vermittler-Funktionsbaustein dazu eingerichtet, die zweiten Daten der ersten Programmteile automatisch zueinander zu verriegeln.

Ferner ist vorteilhaft, wenn ein entsprechender Vermittler-Funktionsbaustein dazu eingerichtet ist, den wenigstens einen ersten Programmteil automatisch zu instanziieren.

Gemäß einer bevorzugten Ausführungsform ist ein Vermittler-Funktionsbaustein dazu eingerichtet, die ersten Daten automatisch über eine vorhandene Datenverbindung zwischen der Speicherprogrammierbaren Steuerung und der Einrichtung zu übertragen.

In besonders vorteilhafter Weise ist ein entsprechender Vermittler-Funktionsbaustein ferner zum Ansteuern einer antriebsintegrierten Sicherheitsfunktion eingerichtet.

Der erfindungsgemäße Vermittler-Funktionsbaustein ist, insbesondere auch in seinen Ausgestaltungen, für eine Durchführung des erfindungsgemäßen Verfahrens in besonderer Weise geeignet.

Bezüglich weiterer Merkmale, Ausgestaltungen und Vorteile des Vermittler-Funktionsbausteins sei auf die Erläuterungen bezüglich des erfindungsgemäßen Verfahrens ausdrücklich hingewiesen.

Eine erfindungsgemäße Recheneinheit ist, insbesondere programmtechnisch, dazu eingerichtet, ein erfindungsgemäßes Verfahren durchzuführen.

Die Erfindung betrifft zudem ein Computerprogramm mit Programmcodemitteln, um alle Schritte gemäß einem erfindungsgemäßen Verfahren durchzuführen, wenn das Computerprogramm auf einem Computer oder einer entsprechenden Recheneinheit ausgeführt wird.

Das erfindungsgemäß vorgesehene Computerprogrammprodukt mit Programmcodemitteln, die auf einem computerlesbaren Datenträger gespeichert sind, ist zum Durchführen aller Schritte gemäß einem erfindungsgemäßen Verfahren ausgebildet, wenn das Computerprogramm auf einem Computer oder einer entsprechenden Recheneinheit ausgeführt wird. Geeignete Datenträger sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt eine mit einer Einrichtung verbundene sicherheitsgerichtete Speicherprogrammierbare Steuerung gemäß einer besonders bevorzugten Ausführungsform der Erfindung.
- Figur 2: zeigt eine weitere mit einer Einrichtung verbundene sicherheitsgerichtete Speicherprogrammierbare Steuerung gemäß einer besonders bevorzugten Ausführungsform der Erfindung.

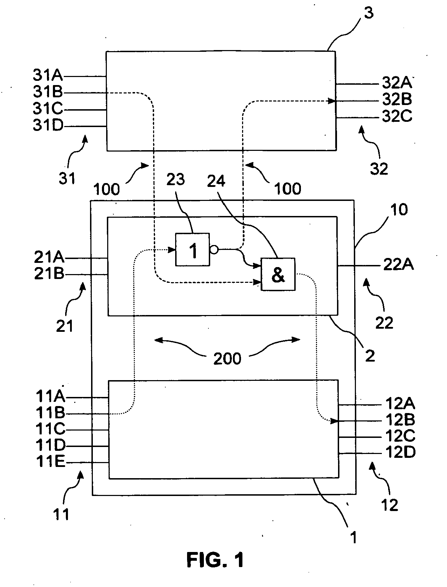

In Figur 1 ist schematisch eine sicherheitsgerichtete Speicherprogrammierbare Steuerung 10 dargestellt, die mit einer Einrichtung 3 verbunden ist. Die Pfeile symbolisieren Datenflüsse. Die Speicherprogrammierbare Steuerung weist einen ersten Programmteil 1 und einen zweiten Programmteil 2 auf. Mittels des ersten Programmteils werden zweite Daten 200 (gepunktet dargestellt) an den zweiten Programmteil 2 weitergegeben bzw. von diesem empfangen. Wenngleich in Figur 1 lediglich jeweils ein erster Programmteil 1 und ein zweiter Programmteil 2 dargestellt sind, sei jedoch zu verstehen gegeben, dass eine erfindungsgemäße Steuerung 10 auch jede beliebige andere Anzahl der jeweiligen Programmteile, insbesondere mehrere erste Programmteile 1 aufweisen kann. Der zweite Programmteil 2 weist in der Abbildung die Gatter 23 und 24 auf, die als Nicht-Gatter 23 und als Und-Gatter 24 ausgebildet sind. Es sei betont, dass der zweite Programmteil 2 auch andere und zusätzliche Beeinflussungseinrichtungen, wie etwa entsprechende Gatter, logische Einheiten und dergleichen aufweisen,kann.

Die sicherheitsgerichtete Speicherprogrammierbare Steuerung 10 ist mit der Einrichtung 3 verbunden, die eine einrichtungsintegrierte, mittels vorbestimmter, insbesondere herstellerspezifischer, erster Daten 100 ansteuerbare Sicherheitsfunktionen bereitstellt. Die Steuerung 10 stellt an die Einrichtung 3 erste Daten 100 (gestrichelt dargestellt) bereit bzw. empfängt diese von der Einrichtung 3. Bei der Einrichtung 3 kann es sich beispielsweise um eine antriebsintegrierte Steuerung 3 handeln, die Sicherheitsfunktionen bezüglich des von dieser Steuerung angesteuerten bzw. geregelten Antriebs bereitstellt. Hingegen handelt es sich bei den Programmteilen der Speicherprogrammierbaren Steuerung 10 vorzugsweise um ein systemintegrierte Programmteile, die beispielsweise durch Funktionsbausteine (FB) in einer Programmiersprache realisiert sind, welche in dem entsprechenden System ausführbar sind.

Insbesondere handelt es sich bei dem ersten Programmteil 1 der Steuerung 10 um den vom Anwender programmierbaren Teil der Steuerung 10, welcher vorzugsweise mittels eines Sicherheits-Funktionsbausteins (FB) realisiert ist, wohingegen es sich bei dem zweiten Programmteil 2 um einen Vermittler-Funktionsbaustein handelt, der automatisch arbeitet. Der Vermittler-Funktionsbaustein wird in der entsprechenden Umgebung für den Anwender transparent bereitgestellt und ist vorzugsweise für diesen nicht "sichtbar".

Durch die Bereitstellung des zweiten Programmteils 2 wird ein Proxy-Konzept in der SI-Programmierung verwirklicht. Durch Bereitstellung eines Proxys bzw. Vermittler-Funktionsbausteins 2 ist es nicht mehr erforderlich, dass ein Anwender selbständig erste Programmteile 1, d.h. insbesondere sicherheitsgerichtete Funktionsbausteine, mit den vorhandenen einrichtungsintegrierten Sicherheitsfunktionen verbinden muss. Insbesondere ist nicht mehr erforderlich, dass Verriegelungen verschiedener erster Programmteile 1 oder in ersten Programmteilen 1 bereitgestellter Parameter, beispielsweise von Safe-Motion-FBs, zueinander programmiert werden müssen, um Prioritäten und/oder Konflikte der verschiedenen sicherheitsbezogenen Überwachungen im Antrieb zu berücksichtigen.

Sowohl die ersten 1 und zweiten 2 Programmteile der sicherheitsgerichteten integrierten Speicherprogrammierbaren Steuerung 10 als auch die Einrichtung 3 weisen Eingabeparameter und Ausgabeparameter auf, die im Folgenden näher erläutert werden. Es versteht sich, dass neben den im Folgenden darzustellenden Eingabe- und Ausgabeparametern auch beliebige andere Parameter vorgesehen sein können, ohne den Umfang der Erfindung zu verlassen.

Der erste Programmteil 1 weist Eingabeparameter 11 und Ausgabeparameter 12 auf. Die Eingabeparameter 11 sind im Einzelnen mit 11A bis 11E bezeichnet. Bei den Eingabeparametern 11A bis 11E kann es sich beispielsweise um Wahrheitswerte, Ganzzahlen, Fließkommazahlen, wie oben erläutert um binäre Wahrheitswerte, sogenannte (SAFE- )BOOLs, (SAFE-)WORDs und/oder um Zeitparameter oder -werte handeln. Hierdurch kann beispielsweise mittels eines binären Wahrheitswert ein sicherer Systemzustand signalisiert werden. Ferner kann beispielsweise eine Identifizierungsnummer einer Achse bekannt gegeben, eine Überwachungszeit angegeben und/oder ein Reset angefordert bzw. ausgeführt werden. Es kann insbesondere über entsprechende Eingabewerte ein Signal zur Aktivierung oder Deaktivierung von Komponenten, beispielsweise Antriebskomponenten, bereitgestellt werden.

Über die Ausgabewerte 12, im Einzelnen mit 12A bis 12D bezeichnet, können entsprechende Ausgabeparameter bereitgestellt werden. Wurde über einen Eingabeparameter 11A bis 11E beispielsweise ein Anhalten der Einrichtung angefordert, so kann über einen entsprechenden Ausgabewert 12 das erfolgte Anhalten, das gegebenenfalls von einer angesteuerten Vorrichtung abzufragen ist, signalisiert werden. Ferner können entsprechende Ausgabewerte, Fehlerwerte oder Diagnoseparameter angegeben oder ein (sicherer) Betriebszustand der Einrichtung signalisiert werden.

Es sei ferner zu verstehen gegeben, dass die Ein- und Ausgabeparameter 11 bzw. 12 des ersten Programmteils 1 von der Ausgestaltung des hierbei jeweils verwendeten Bausteins abhängen. Ferner sei zu verstehen gegeben, dass der Programmteil 1 bzw. ein für diesen Zweck verwendeter Funktionsbaustein den von einem Programmierer beeinflussbaren Bereich der sicherheitsgerichteten programmierbaren Steuerung 10 darstellt. Programmteil 2 ist demgegenüber in der Steuerung 10 vorgesehen und kann insbesondere transparent ausgebildet sein, so dass der Programmierer die Funktion des zweiten Programmteils 2 nicht notwendigerweise wahrnehmen muss. In der Regel arbeitet der zweite Programmteil 2 in Form eines Proxys automatisch und weist nur rudimentäre Ein- und Ausgabeparameter auf bzw. wird nur einmalig mit Parametern konfiguriert. Insbesondere kann es sich bei den entsprechenden Eingabeparametern 21 bzw. 21A und 21B um Parameter zur Aktivierung des zweiten Programmteils 2 handeln. Ferner ist beispielsweise eine Zuordnung eines entsprechenden zweiten Programmteils 2 zu einer Achse vornehmbar. Als Ausgabeparameter 22 bzw. 22A des automatischen zweiten Programmteils 2 kann beispielsweise ein Signal vorgesehen sein, das einen betriebsfähigen Zustand des zweiten Programmteils 2 signalisiert.

Einrichtung 3 weist ebenfalls Eingabeparameter 31 und Ausgabeparameter 32 auf, die in analoger Weise als Eingabeparameter 31A bis 31D bzw. 32A bis 32C dargestellt sind. Die Eingabeparameter 31 der Einrichtung 3 werden in der Regel von der durch die Einrichtung 3 angesteuerten Vorrichtung, beispielsweise einer Achse, bereitgestellt. Beispielsweise kann es sich hierbei um ein Signal handeln, das den Normalbetrieb der Vorrichtung signalisiert. Ferner kann ein Eingabeparameter 31 etwa anzeigen, dass eine sichere Antriebssperre in der Vorrichtung ausgelöst wurde. Beispielsweise kann auch angegeben werden, dass in der Vorrichtung ein sicherer Stillstand aktiv ist, bzw. dass eine sichere Bewegung der Vorrichtung oder einer Komponente vorliegt. Die Ausgabeparameter 32 der Einrichtung 3 können beispielsweise eine Betriebsart der Vorrichtung ansteuern, eine Antriebssperre auslösen und/oder eine Zustimmungseinrichtung aktivieren.

Im Folgenden wird die Funktionsweise der Struktur 100 an einem Beispiel beschrieben. Der Eingabeparameter 11B des ersten Programmteils 1 sei hierbei ein sicherheitsrelevanter Parameter. Weist dieser Parameter 11B, beispielsweise in Form eines binären Wahrheitswerts, den Wert "1" auf, befindet sich das System in einem sicheren Zustand. Weist der Parameter 11B hingegen den Wert "0" auf, so liegt ein unsicherer Systemzustand vor, aufgrund dessen eine entsprechende Sicherheitsmaßnahme, beispielsweise die Abschaltung eines Antriebs bzw. eine Antriebssperre, einzuleiten ist. Dieser Fall wird im Folgenden erläutert.

Der erste Programmteil 1 leitet den Eingabeparameter 11B zunächst an den zweiten Programmteil 2 weiter. Über das Nicht-Gatter 23 wird der Wert invertiert und einerseits in Form erster Daten 100 an die Einrichtung 3 weitergegeben, wo er als Ausgabeparameter 32B bereitgestellt wird und zur Abschaltung einer entsprechenden Vorrichtung oder zur Einleitung einer Sicherheitsmaßnahme dient. Beispielsweise wird durch die Einrichtung 3 eine Antriebssperre ausgelöst. Gleichzeitig wird der Wert an ein Und-Gatter bereitgestellt. Nach Aktivieren der Antriebssperre über Ausgabeparameter 32B erhält Einrichtung 3 von der angesteuerten Vorrichtung über Eingabeparameter 31B die Rückmeldung, dass eine entsprechende Antriebssperre ausgelöst wurde. In Form erster Daten stellt Einrichtung 3 diesen Wert nun Steuerung 10, und hier den zweiten Programmteil 2 zur Verfügung, wo er ebenfalls dem Und-Gatter 24 zugeführt wird. Beide Eingänge des Und-Gatters weisen damit den Wert "1" auf, wodurch der Ausgabewert des Gatters ebenfalls den Wert "1" annimmt. Hierdurch wird signalisiert, dass aufgrund des vorliegenden unsicheren Systemzustands eine entsprechende Maßnahme eingeleitet wurde. Dieser Wert wird in Form zweiter Daten 200 an den ersten Programmteil 1 weitergeleitet, wo er in Form des Ausgabeparameters 12B bereitgestellt wird, und die Einleitung der Maßnahme als entsprechenden Parameter 12B in Form des Wertes "1" anzeigt.

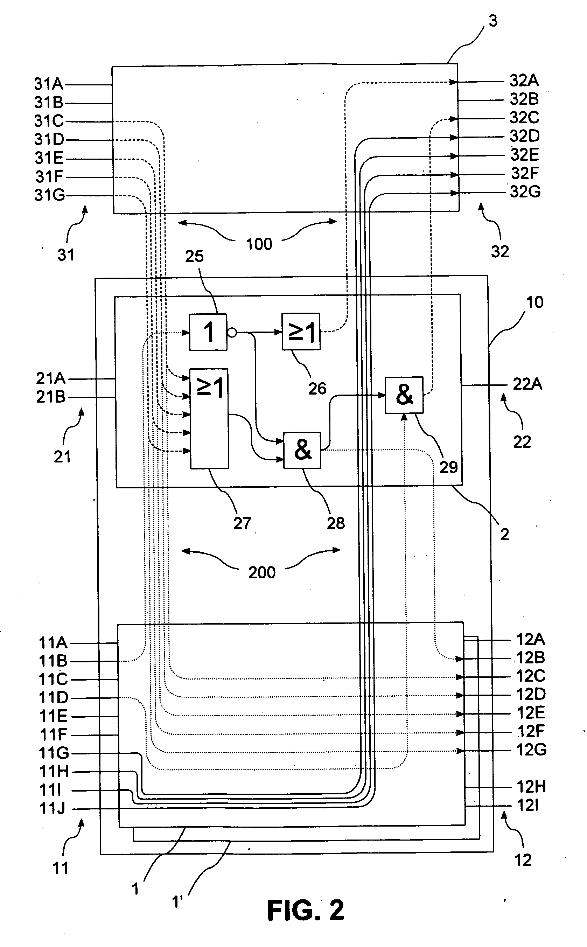

In Figur 2 ist eine sicherheitsgerichtete Speicherprogrammierbare Steuerung 10 dargestellt, die mit einer Einrichtung 3 verbunden ist. Im Gegensatz zur Darstellung der Figur 1 ist hier der zweite Programmteil 2 als eine Reihe weitere Elemente aufweisend dargestellt, die eine Verriegelung und/oder Priorisierung von zweiten Daten 200 ermöglichen. Auch hier sei darauf hingewiesen, dass weitere Einrichtungen entsprechender Art vorgesehen sein können. Die in Figur 2 dargestellte Struktur weist im Übrigen im Wesentlichen ähnliche strukturelle Merkmale wie jene der Figur 1 auf.

Im Folgenden wird die Wirkungsweise anhand eines einzigen ersten Programmteils 1 erläutert. Es versteht sich jedoch, dass die zweiten Daten 200 auch von einer beliebigen anderen Anzahl von ersten Programmteilen bereitgestellt werden können, wie durch die ersten Programmteile 1 und 1' veranschaulicht, und dass entsprechende zweite Daten mehrerer erster Programmteile 1, 1' vorhanden sein können.

In der Figur 2 ist eine Verriegelung und/oder Priorisierung von Eingabeparametern dargestellt. Hierbei ist zwischen zu priorisierenden und/oder zu verriegelnden Eingabeparametern und solchen zu unterscheiden, für die eine entsprechende Verriegelung und/oder Priorisierung nicht erforderlich ist. So weist Programmteil 1 Eingabeparameter 11G bis 11J auf, die im Wesentlichen durch Programmteil 2 unverändert an Einrichtung 3 weitergereicht (geroutet) werden und dort in Form von Ausgabeparametern zur Steuerung beispielsweise eines Antriebs verwendet werden. Insbesondere kann es sich bei diesen Parametern um solche Parameter handeln, die auch bei gleichzeitigem Auftreten bzw. bei gleichzeitiger Änderung keine kritischen Maschinensituationen zur Folge haben.

Im Gegensatz dazu stehen die Eingabeparameter 11B und 11D. Hierbei kann es sich beispielsweise um Parameter handeln, die einen Betriebsmodus bzw. eine Betriebsart, eine Abschaltung bzw. Sperrung einer Komponente und/oder eine Zustimmungseinrichtung betreffen. Diese Parameter bedürfen, um Konflikte zu vermeiden, einer Priorisierung durch den zweiten Programmteil. Hierdurch kann vermieden werden, dass die antriebsinternen Überwachungen ansprechen, beispielsweise im Rahmen einer antriebsbasierten Failsafe-Reaktion. Die Priorisierung und/oder Verriegelung erfolgt in dem zweiten Programmteil 2 automatisch und ohne zusätzliche Eingriffe des Bedieners. Der Bediener muss lediglich den ersten Programmteil 1, der einem Furiktionsbaustein entsprechen kann, programmieren und muss sich um eine Priorisierung der Ein- bzw. Ausgabeparameter nicht kümmern.

Es sei zunächst Eingabeparameter 11B näher betrachtet. Eingabeparameter 11B wird in Form zweiter Daten 200 dem zweiten Programmteil 2, und hier einem Nicht-Gatter 25 zugeführt. Wird beispielsweise über Eingabeparameter 11B eine nicht sichere Betriebsart durch den Wert "0" signalisiert, weist der Ausgang des Nicht-Gatters 25 den Wert "1" auf. Dieser Wert wird an das Oder-Gatter 26 bereitgestellt. Das Oder-Gatter 26 weist weitere, nicht dargestellte Eingabekanäle auf, so dass bei Vorliegen wenigstens eines Eingangswerts "1" an dem Oder-Gatter 26 erste Daten 100 an die Einrichtung 33, und hier an Ausgabekanal 32A weitergegeben werden. In der dargestellten Struktur bewirkt also jede Änderung eines Eingabeparameters 11B eine entsprechende, jedoch inverse Änderung des Ausgabeparameters 32A.

Ferner wird von dem Nicht-Gatter 25 der Wert "1" an das Und-Gatter 28 bereitgestellt. Gleichzeitig werden Eingabeparameter 31C bis 31G der Einrichtung 3 verarbeitet. Diese Eingabeparameter 31C bis 31G werden einerseits in Form zweiter Daten als Ausgabeparameter 12C bis 12G des ersten Programmteils 1 bereitgestellt, wodurch diese dem System bekanntgegeben werden. Ferner werden die Parameter 31C bis 31G als erste Daten an den zweiten Programmteil 2, und hier an das Oder-Gatter 27 bereitgestellt. Weist wenigstens ein Eingabeparameter 31C bis 31G der Einrichtung 3 den Wert "1" auf, wird durch das Oder-Gatter 27 ein Wert "1" an das Und-Gatter 28 ausgegeben. Im betrachteten Beispiel weisen somit beide Eingangswerte des Und-Gatters 28 den Wert "1" auf, wodurch von dem Und-Gatter 28 der Wert "1" ausgegeben wird. Der Ausgangswert des Und-Gatters 28 wird an das weitere Und-Gatter 29 weitergeleitet. Ferner wird auch ein Eingabeparameter 11D des ersten Programmteils 1 an dieses Und-Gatter 29 weitergeleitet. Nur wenn Eingabeparameter 11D und der zweite Eingangswert des Und-Gatters 29 den Wert "1" annehmen, gibt auch das Und-Gatter 29 den Wert "1" aus, welcher dann in Form erster Daten als Ausgabeparameter 32C der Einrichtung 3 ausgegeben wird.

Hierdurch wird also bewirkt, dass der Eingabeparameter 11D des ersten Programmteils 1 nur dann eine Wirkung auf einen Ausgabeparameter 32C der Einrichtung 3 entfaltet, wenn ferner der Eingabeparameter 11B den Wert "0" annimmt und gleichzeitig ein Eingabeparameter 31C bis 31D der Einrichtung 3 den Wert "1" aufweist. Somit kann eine Verriegelung des Eingabeparameters 11D bis zum Eintritt weiterer Bedingungen erfolgen.

Durch eine gezielte Priorisierung und/oder Verriegelung auf Systemebene kann bewirkt werden, dass ein Konflikt von Parametern vermieden wird und dadurch die Abschaltung entsprechend angesteuerter Einheiten, insbesondere in Form einer Failsafe-Reaktion, vermieden wird. Es sei betont, dass das vorgenannte Beispiel nur eine Möglichkeit einer entsprechenden Priorisierung und/oder Verriegelung angibt, und dass jede beliebige andere Priorisierung entsprechender Werte gegeneinander vorgenommen werden kann.

Es versteht sich, dass in den dargestellten Figuren nur besonders bevorzugte Ausführungsformen der Erfindung dargestellt sind. Daneben ist jede andere Ausführungsform denkbar, ohne den Rahmen dieser Erfindung zu verlassen.

## Patentansprüche

1. Verfahren zum Programmieren einer sicherheitsgerichteten Speicherprogrammierbaren Steuerung (10), die mit einer Einrichtung (3) verbindbar ist, welche eine einrichtungsintegrierte, mittels vorbestimmter erster Daten (100) ansteuerbare Sicherheitsfunktion bereitstellt, wobei die Speicherprogrammierbare Steuerung (10) mit wenigstens einem ersten Programmteil (1, 1') zur Bereitstellung zweiter Daten (200) zum Ansteuern der einrichtungsintegrierten Sicherheitsfunktion und mit einem zweiten Programmteil (2) zur automatischen Umwandlung der zweiten Daten (200) in die ersten Daten (100) ausgestattet wird.

2. Verfahren nach Anspruch 1, wobei der erste und/oder der zweite Programmteil als Funktionsbaustein (1, 1'; 2)einer SPS-Programmierumgebung ausgebildet sind.

3. Verfahren nach Anspruch 1 oder 2, wobei der zweite Programmteil (2) die zweiten Daten (200) des wenigstens ersten Programmteils (1) automatisch zueinander verriegelt.

4. Verfahren nach einem der vorstehenden Ansprüche, wobei der zweite Programmteil (2) automatisch instanziiert wird, wenn die Einrichtung (3) in das Programm der Speicherprogrammierbaren Steuerung (10) eingebunden wird.

5. Verfahren nach einem der vorstehenden Ansprüche, wobei der wenigstens eine erste Programmteil (1, 1') beim Instanziieren des zweiten Programmteils (2) ebenfalls automatisch instanziiert wird.

6. Verfahren nach einem der vorstehenden Ansprüche, wobei der zweite Programmteil (2) die ersten Daten (100) automatisch über eine vorhandene Datenverbindung zwischen der Speicherprogrammierbaren Steuerung (10) und der Einrichtung (3) überträgt.

7. Verfahren nach einem der vorstehenden Ansprüche, wobei der wenigstens eine erste Programmteil (1, 1') mittels Dialogen parametriert wird.

8. Verfahren nach einem der vorstehenden Ansprüche, wobei eine Wizard-Funktionalität zum Bereitstellen des wenigstens einen ersten Programmteils (1, 1') bereitgestellt wird.

9. Verfahren nach einem der vorstehenden Ansprüche, wobei eine Wizard-Funktionalität zum Instanziieren des wenigstens einen ersten Programmteils (1, 1') und/oder des zweiten Programmteils (2) bereitgestellt wird.

10. Verfahren nach einem der vorstehenden Ansprüche, wobei die einrichtungsintegrierte Sicherheitsfunktion eine antriebsintegrierte Sicherheitsfunktion ist.

11. Vermittler-Funktionsbaustein (2) für eine sicherheitsgerichtete Speicherprogrammierbare Steuerung (10),
der dazu eingerichtet ist, zum Ansteuern einer einrichtungsintegrierten, mittels vorbestimmter erster Daten (100) ansteuerbaren Sicherheitsfunktion von wenigstens einem ersten Programmteil (1, 1') der Speicherprogrammierbaren Steuerung (10) bereitgestellte zweite Daten (200) automatisch in die ersten Daten (100) umzuwandeln.

12. Vermittler-Funktionsbaustein (2) nach Anspruch 11, der dazu eingerichtet ist, die zweiten Daten (200) automatisch zueinander zu verriegeln.

13. Vermittler-Funktionsbaustein (2) nach Anspruch 11 oder 12, der dazu eingerichtet ist, den wenigstens einen ersten Programmteil (1, 1') automatisch zu instanziieren.

14. Vermittler-Funktionsbaustein (2) nach Anspruch 11, 12 oder 13, der dazu eingerichtet ist, die ersten Daten (100) automatisch über eine vorhandene Datenverbindung zwischen der Speicherprogrammierbaren Steuerung (10) und der Einrichtung (3) zu übertragen.

15. Vermittler-Funktionsbaustein (2) nach einem der Ansprüche Anspruch 11 bis 14, der zum Ansteuern einer antriebsintegrierten Sicherheitsfunktion eingerichtet ist.

16. Recheneinheit, die zur Durchführung eines Verfahrens nach einem der vorstehenden Ansprüche geeignet ist.

17. Computerprogramm mit Programmcodemitteln, um alle Schritte eines Verfahrens nach einem der Ansprüche 1 bis 10 durchzuführen, wenn das Computerprogramm auf einem Computer oder einer entsprechenden Recheneinheit ausgeführt wird.

18. Computerprogrammprodukt mit Programmcodemitteln, die auf einem computerlesbaren Datenträger gespeichert sind, um alle Schritte eines Verfahrens nach einem der Ansprüche 1 bis 10 durchzuführen, wenn das Computerprogramm auf einem Computer oder einer entsprechenden Recheneinheit ausgeführt wird.
